# EUROPEAN PATENT SPECIFICATION

(11) **EP 2 310 236 B1**
(45) Date of publication and mention of the grant of the patent: **05.04.2017**
(21) Application number: 09787801.1
(22) Date of filing: 24.07.2009
(51) Int. Cl.: B60S 3/06, A46B 13/00

(54) **IMPROVED CLEANING BLADE STRIP ELEMENT FOR MAKING MOTOR VEHICLE WASHING SYSTEM ROTARY BRUSH ASSEMBLIES**
VERBESSERTES REINIGUNGSTUCHELEMENT FÜR ROTATIONSBÜRSTENANORDNUNG EINER WASCHVORRICHTUNG FÜR KRAFTFAHRZEUGE
FEUILLE DE NETTOYAGE PERFECTIONNE POUR ENSEMBLE DE BROSSE ROTATIVE DE SYSTEMES DE LAVAGE DE VEHICULES A MOTEUR

(30) Priority: 25.07.2008 IT MI20081368
(43) Date of publication of application: 20.04.2011
(73) Proprietor: Favagrossa Edoardo S.r.l., 26041 Roncadello di Casalmaggiore (CR) (IT)
(72) Inventor: FAVAGROSSA, Francesco, I-26041 Roncadello di Casalmaggiore (CR) (IT)
(74) Representative: Rastelli, Franco
(86) International application number: PCT/IT2009/000329
(87) International publication number: WO 2010/010593

(56) References cited:
- EP-A- 1 878 356
- WO-A-2008/032344
- DE-U1- 29 809 510
- US-A- 4 815 158
- US-A- 5 410 770
- US-A1- 2002 174 503
- US-A1- 2008 078 048
- US-B1- 6 564 418

## Description

### BACKGROUND OF THE INVENTION

The present invention relates to an improved cleaning blade strip element for making motor vehicle washing system rotary bush assemblies.

As is known, automatic washing systems for washing motor vehicles conventionally comprise washing rotary brush assemblies including a support member, usually of a cylindric configuration, coupled to a rotary member.

On the outer surface of the supporting member are applied a plurality of adjoining flexible cleaning elements, at one end portion thereof, to said supporting member, perpendicularly to the latter.

The automatic cleaning and washing, for example of a motor vehicle body, are carried out by rotatively driving a plurality of brush assemblies of the above mentioned type, so that the flexible strip elements, held in a present configuration thereof under the centrifugal force generated by the rotary bush assemblies, impact on the motor vehicle body, with an interposition of water and/or suitable washing solutions or emulsions.

Prior washing brush assemblies or movable curtains comprise flaps or string or band members generally constitute of a felt material, or of synthetic material bristles, or synthetic foamed material strings.

The felt, because of its nature, absorbs water and restrains in its meshes the dirt particles removed from the painted body of the motor vehicle being washed.

However, this mode of operation negatively affects a proper duration of paint materials coating the motor vehicle body.

In fact, the foamed bristles, independently from the shapes thereof (of a star, cross, flat or round type), leave signs or marks of the operation and passage thereof, since they are rotatively driven in contact with the vehicle painted bodies.

Actually, a synthetic foamed material has a very good performance with respect to a protective action on the painted surfaces, but it has the disadvantage of having a very weight and, accordingly, a consequent less efficacy in removing dirt.

To the above it should be moreover added that to each brush assembly corresponds a different mechanic and electronic setting of the washing system or machine because of a different weight and texture of the rotary material types.

Document WO-A-2008/032344 discloses substantially the preamble of claim 1.

### SUMMARY OF THE INVENTION

Accordingly, the aim of the present invention is to provide such an improved cleaning element, particularly for rotary brush assemblies to be used in motor vehicle washing systems, adapted to overcome the above mentioned drawbacks affecting the prior art.

Within the scope of the above mentioned aim, a main object of the invention is to provide such a velveted blade strip cleaning element adapted to preserve the starting characteristics of the existing products based on which the washing system machines have been a priori calibrated, and adapted to provide an efficient velveted construction between the surface to be washed and the brush assembly rotary cleaning elements.

Another object of the present invention is to provide such an improved blade strip cleaning element adapted to remove, without absorbing, dirt particles and which has an improved washing efficiency or force.

Yet another object of the present invention is to provide a much more efficiently operating velveted blade strip cleaning element which does not leave objectable signs or marks on the painted surface or bodies of the motor vehicles being washed.

Yet another object of the present invention is to provide such a velveted cleaning element having a very high operating efficiency while reducing its trend to "float" on the surface of the motor vehicle being washed, without sinking into the water layer which is applied on the painted surfaced during the washing operation.

According to the present invention, the above mentioned aim and objects, as well as yet other objects, which will become more apparent hereinafter, are achieved by an improved lamellar strip cleaning element, for making rotary washing brushes for motor vehicle washing systems, according to claim 1.

### BRIEF DESCRIPTION OF THE DRAWINGS

Further characteristics and advantages of the present invention will become more apparent hereinafter from the following detailed disclosure of a preferred, though not exclusive, embodiment of the invention, which is illustrated, by way of an indicative, but not limitative, example in the accompanying drawings, where:
Figure 1 is a partial perspective view showing a rotary brush including a velvet or velveted strip cleaning element according to the present invention;

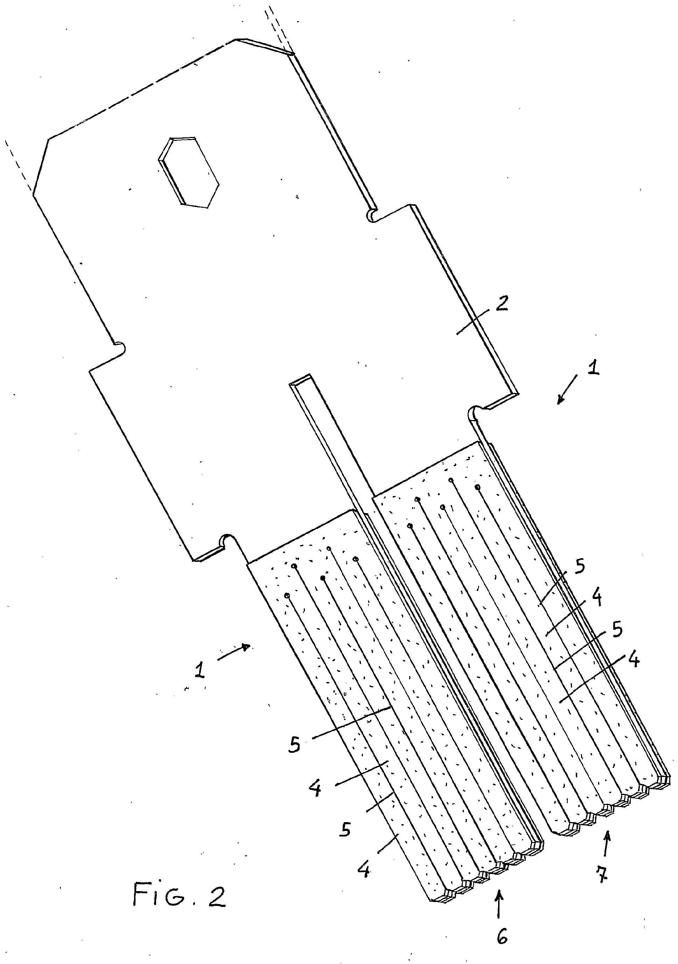

Figure 2 is a further perspective view of the inventive cleaning element in an extended or deploied condition thereof, before its folding and engaging in the rotary brush assembly body;

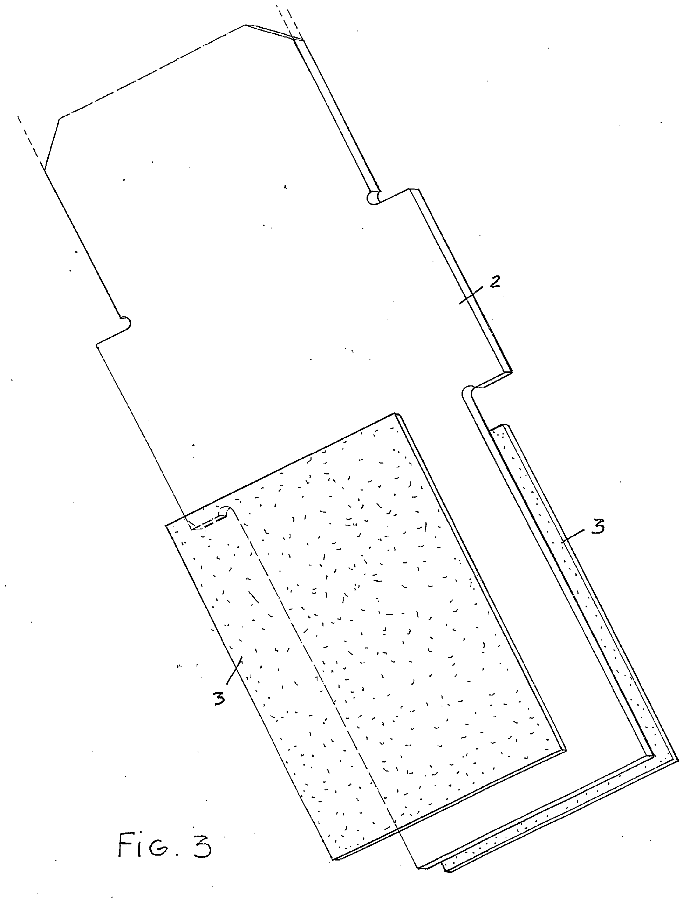

Figure 3 is yet another perspective view showing the basic or main body of the brush assembly during an application of velvet material fabrics thereto:

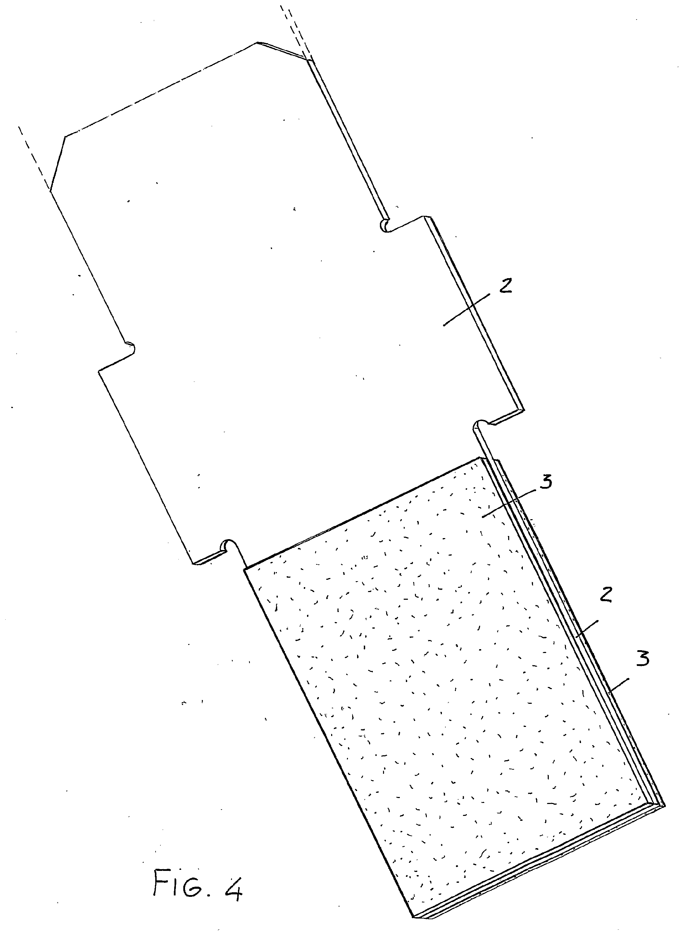

Figure 4 is yet another perspective view showing another step of the brush assembly making process or method, in which the velveted fabric material is affixed to the main or basic body;
Figure 5 is yet a further perspective view of a velveted cleaning element made according to a further aspect of the present invention;

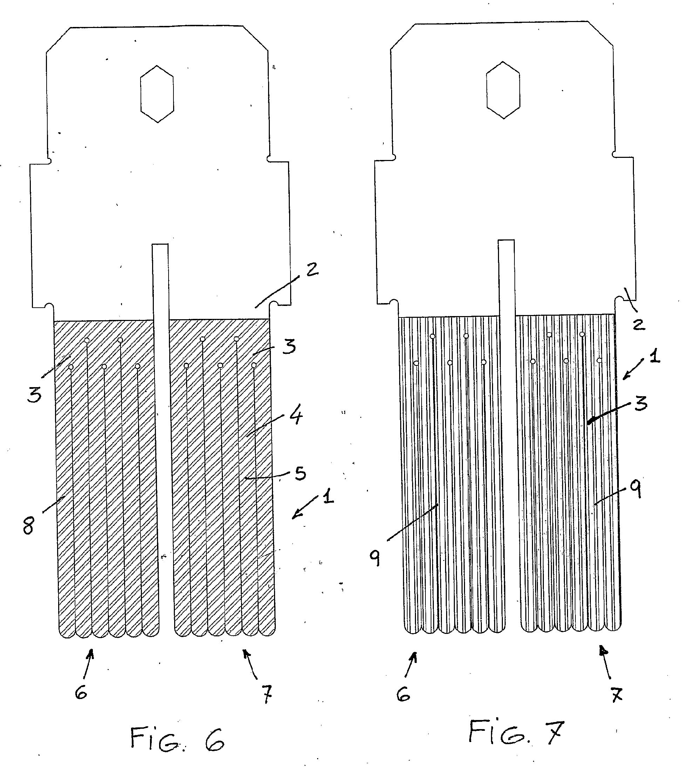

Figure 6 is a front view of the subject cleaning element to which a ribbed velvet fabric material 3 is applied, said velvet fabric material including a plurality of ridges inclined with respect to the longitudinal extension of the plate-like cleaning element;
Figure 7 shows a cleaning element, coated by a velvet ribbed fabric material, the ridges of which are arranged parallel to the longitudinal extension of said cleaning element;

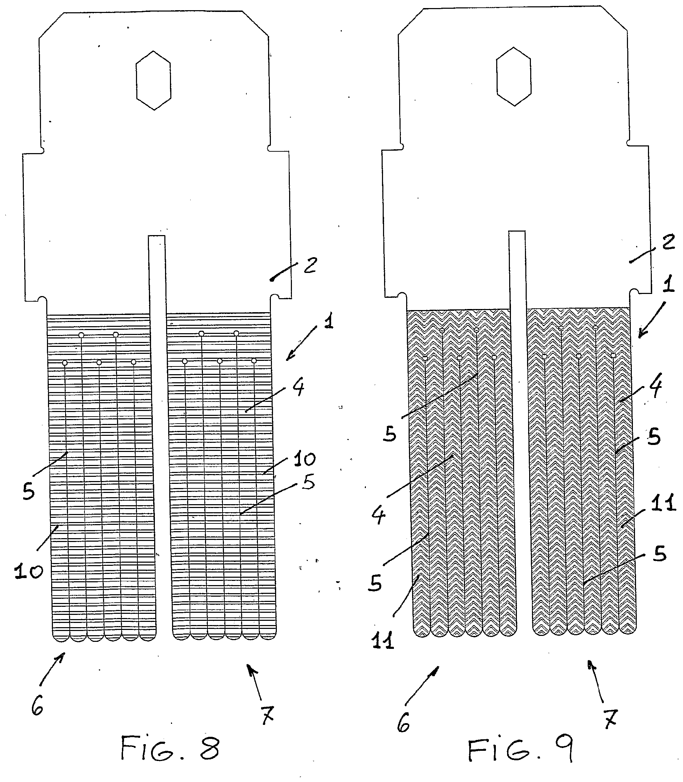

Figure 8 is a front view of an inventive cleaning element, to which a ribbed velvet fabric material is applied including a plurality of ridges arranged crosswise with respect to the longitudinal extension of said cleaning element;
Figure 9 shows a further cleaning element in which the velvet ribbed fabric material element comprises a plurality of ridges having an angled configuration;

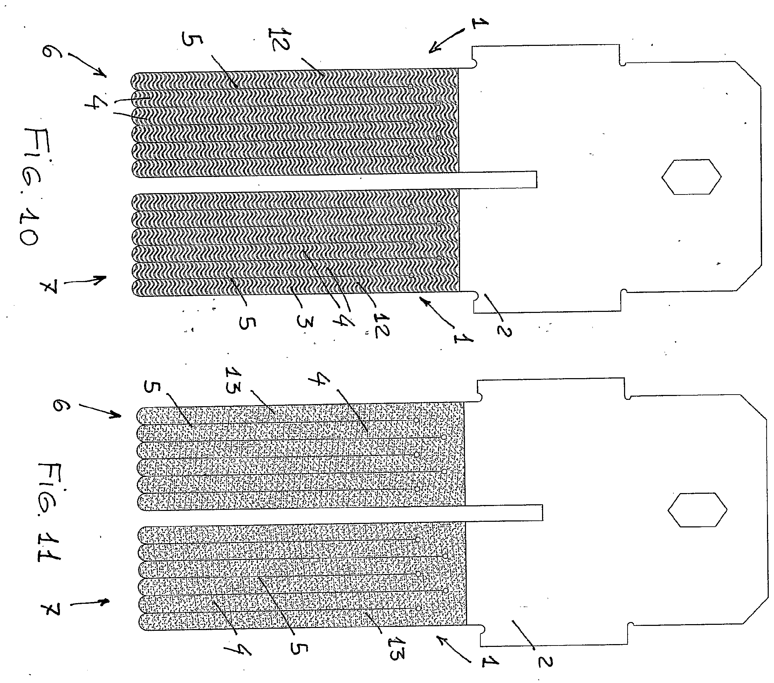

Figure 10 shows a further cleaning element coated by a velvet ribbed fabric material layer, in which the projecting or ridge elements have an approximately sinusoidal pattern;
   and
Figure 11 shows a cleaning element the projecting or ridge element of which have a point pattern or configuration.

### DESCRIPTION OF THE PREFERRED EMBODIMENTS

With reference to the number references of the above mentioned figures, the cleaning element according to the present invention, which has been generally indicated by the reference number 1, comprises a plate-like main body 2, which is made of a foamed closed cell plastics material.

According to another embodiment which is not part of the present invention, said plate-like body 2 may also be made of a non foamed plastics material or any other suitable materials provided that the latter have a flexible nature.

According to the invention, the plate-like body, constituting the basic or main body of the cleaning element, is made of a plastic foamed material such as polyethylene, or EVA.

Said material may have a weight from 10 to 350 Kg/m³.

According to the present invention, on the faces or surfaces of said plate-like body 2, velvet fabric materials 3, or other velvet or felt materials adapted to provide a washing, drying and polishing or buffing operation are applied or coated.

According to an embodiment, said materials comprise a synthetic fabric on a face thereof is coated by spreading an adhesive material and on the other face thereof a velvet pattern or material is coated.

The coupling of the synthetic fabric to the plate-like body 2 may be achieved, in addition to glueing, by thermally or hot melting any other suitable hot melt adhesive.

For example, the fabric materials 3 may comprise mechanically carded or raised fabrics, which have been so carded and/or raised to provide them with a desired velvet aspect or pattern.

Moreover, the velvet fabric material may comprise a polyamide, polyester or a derivative thereof.

For glueing it is possible to use polyurethane glues or any other suitable adhesive substances.

As shown, the plate-like body 2 has a substantially elongated configuration, extending along the longitudinal axis of the band element, and notches or cuts 5 are provided thereon thereby generating a plurality of parallel strip elements 4.

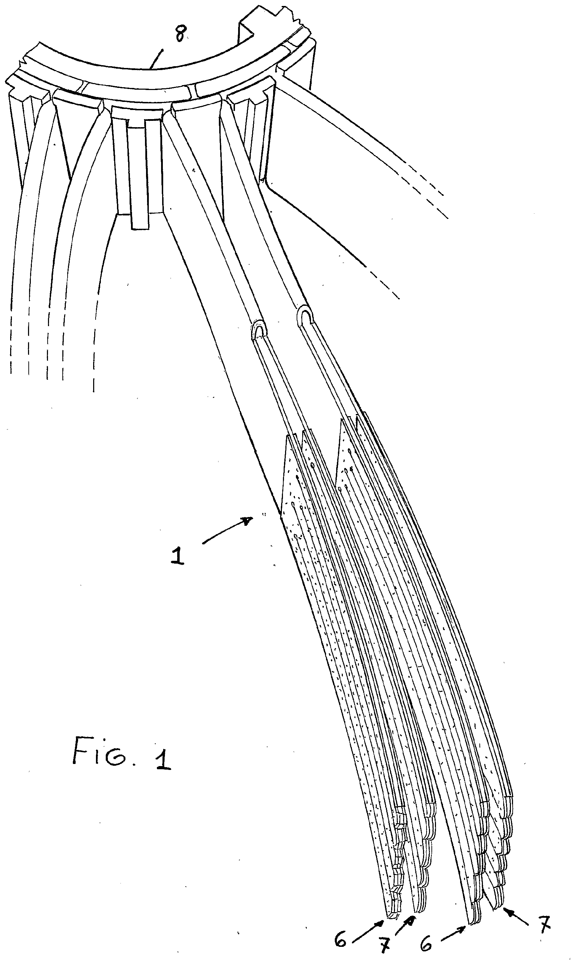

The plate-like body 2 may be folded or bent through 180° about its longitudinal axis to provide two sectors, generally indicated by the reference numbers 6 and 7, which are overlapped onto one another, in their use configuration, as is clearly shown in figure 1, in which the cleaning element 1 according to the present invention is applied to a brush assembly central shaft 8.

According to another embodiment of the present invention, the velvet fabrics, felts or other materials adapted to wash, dry and polish the motor vehicle body, may be applied to the base supporting member 2 by a removable affixing system, for example of that type which is commercially called "Velcro".

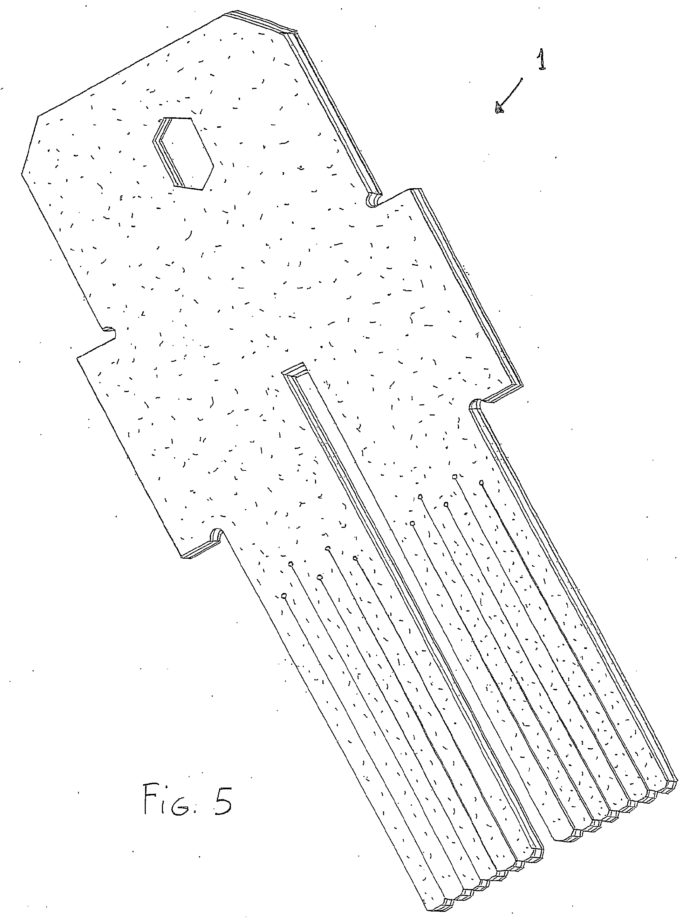

The velvet fabrics 3, or felts and other washing, drying and polishing materials, may also cover the overall surface of the main or base body 2, as is shown, by way of an example, in figure 5.

Thus, since the plate-like body 2 is made of a synthetic foamed material, the overall cleaning element will have a much improved cleaning efficiency whereas, prior like elements would tend to "float" on the vehicle without sufficiently penetrating the water layer applied on the vehicle body paint during the washing operation.

The velvet envelope 3 provides the strips or "bristles" 4 with a very efficient operating characteristics, while preventing said strips or bristles from leaving marks on the painted surfaced of the vehicles being washed.

It should be moreover pointed out that the materials coupled to the plate-like body may also comprise either smooth or ribbed velvet fabrics, or felt or other like materials, having constructional characteristics specifically designed to polish the motor vehicle bodies.

Moreover, said materials coupled to said plate-like body may also comprise velvet fabrics or a felt materials, having characteristics for properly draying the motor vehicle bodies by efficiently removing water particles therefrom.

According to a further aspect of the present invention, the materials coupled to the plate-like body, which, as above stated, may comprise either smooth or ribbed velvet fabrics, or other felt or the like materials, having a structure specifically designed for providing a proper washing, polishing and/or drying operation, are applied to their supporting member in an alternating manner, thereby providing a "bivalent" element, depending on its rotary direction with respect to the surface to be processed.

Thus, it should be apparent that the cleaning element, having the above disclosed velveted surface, may also comprise a ribbed pattern with fabric ridges or projecting portions, having different configurations and inclinations.

In particular, each said cleaning element may comprise ribbed coating fabrics with variously arranged ridges and inclined portions, with a longitudinal arrangement, a cross arrangement, an angled pattern, a sinusoidal pattern, or point projecting elements, thereby greatly increasing the cleaning capability and efficiently removing dirt and debris from the motor vehicle bodies.

Thus, with the above disclosed alternating approaches, constituting the subject matter of the present invention, is possible to apply to the inventive cleaning element a felt portion on a side thereof, in particular on its washing side, and yet another felt portion on the other side thereof, that is its polishing side, thereby providing a double washing and polishing effect.

From the above it should be moreover apparent that the inventive cleaning element could be also used to remove dirt and debris/powder and dust from the desired surfaces without using water, that is in a sort of dry washing operation.

It has been found that the invention fully achieves the intended aim and objects.

In fact, the invention has provided an improved cleaning element adapted to preserve the starting characteristics of the existing products based on which the washing machines have been a priory set or calibrated, while providing an efficient velveted construction or structure between the surface to be washed and the rotary cleaning elements of the brush assemblies operating thereon.

In practicing the invention, the contingent size and shapes, can be any, depending on requirements and the status of the art.

## Claims

1. An improved lamellar strip cleaning element (1), for making rotary washing brushes for motor vehicle body washing systems, said cleaning element comprising a plate body (2) forming a base supporting body of said cleaning element (1), thereon are applied synthetic velvet fabric or felt materials (3), said plate body (2) being made of a flexible closed cell foamed plastic material, **characterized in that** said flexible closed cell foamed plastic material is a closed cell foamed polyethylene or EVA, that said synthetic velvet fabric or felt materials (3) have vehicle body dust removing, washing, drying and polishing properties, that said synthetic velvet fabric or felt materials comprise either a flat or a ribbed synthetic velvet fabric having a first face including adhesive or mechanic coupling means for either adhesively or mechanically removably coupling said velvet synthetic fabric to at least a side of said supporting body (2) and a second face which is a velvet face, and that said adhesive coupling means comprise an adhesive or a hot-melt adhesive material.

2. A cleaning element (1), according to claim 1, **characterized in that** said closed cell foamed plastic material has a weight from 10 to 350 Kg/m³.

3. A cleaning element (1), according to claim 1, **characterized in that** said synthetic velvet fabric material (3) comprises a mechanically carded or raised synthetic velvet fabric material.

4. A cleaning element (1), according to claim 1, **characterized in that** said adhesive material comprises a polyurethane glue.

5. A cleaning element (1), according to claim 1, **characterized in that** said removable coupling means comprise a "Velcro" system.

6. A cleaning element (1), according to claim 1, **characterized in that** said synthetic velvet fabric comprises a polyamide, polyester material or a derivate thereof.

7. A cleaning element (1), according to claim 1, **characterized in that** said plate body (2) has an elongated shape extending through a longitudinal axis of a band element, and being provided with a plurality of cut-outs defining a plurality parallel band strips, said plate body (2) being adapted to be folded through 180° about a longitudinal axis thereof to provide two sectors (6, 7) to be overlapped to one another.

8. A cleaning element (1), according to claim 1, **characterized in that** said synthetic velvet fabric material (3) covers an overall surface of said plate body (2).

9. A cleaning element (1), according to claim 1, **characterized in that** said synthetic fabric material is coupled to said body (2) in an alternating manner to provide a bivalent element depending on a rotary direction of a brush with respect to a motor vehicle body surface to be processed.

10. A cleaning element (1), according to claim 1, **characterized in that** said synthetic velvet fabric comprises a plurality of variously oriented ridge or projection portions so shaped or arranged as to form a cleaning surface having a plurality of projecting and recessed cleaning regions.

11. A cleaning element (1), according to claim 1, **characterized in that** said synthetic ribbed velvet fabric material comprises a plurality of ridges inclined with respect to the longitudinal extension of said plate body (2).

12. A cleaning element (1), according to claim 1, **characterized in that** said synthetic velvet ribbed fabric material comprises a plurality of ridges arranged parallel to the longitudinal extension of said plate body (2).

13. A cleaning element (1), according to claim 1, **characterized in that** said synthetic ribbed velvet fabric material comprises a plurality of ridges arranged crosswise with respect to the longitudinal extension of said plate body (2).

14. A cleaning element (1), according to claim 1, **characterized in that** said synthetic velvet ribbed fabric material comprises a plurality of ridges having an angled configuration.

15. A cleaning element (1), according to claim 1, **characterized in that** said synthetic velvet ribbed fabric material comprises a plurality of ridges having a substantially sinusoidal pattern.

16. A cleaning element (1), according to claim 1, **characterized in that** said synthetic velvet ribbed fabric material comprises a plurality of ridge elements having a pointed pattern.

## Patentansprüche

1. Verbessertes Lamellarstreifen-Reinigungselement (1) zum Herstellen von Rotationswaschbürsten für Waschsysteme für Fahrzeugkarosserien, wobei das Reinigungselement einen Plattenkörper (2) umfasst, der einen Basisträgerkörper des Reinigungselements (1) bildet, auf dem synthetische Samtstoff- oder Filzmaterialien (3) aufgebracht sind, wobei der Plattenkörper (2) aus einem flexiblen geschlossenzelligen geschäumten Kunststoffmaterial hergestellt ist, **dadurch gekennzeichnet, dass** es sich bei dem geschlossenzelligen geschäumten Kunststoffmaterial um geschlossenzelliges geschäumtes Polyethylen oder EVA handelt, dass die synthetischen Samtstoff- oder Filzmaterialien (3) Staubentfernungs-, Reinigungs-, Trocknungs- und Poliereigenschaften für eine Fahrzeugkarosserie aufweisen, dass die synthetischen Samtstoff- oder Filzmaterialien (3) entweder einen flachen oder einen gerippten synthetischen Samtstoff umfassen, der eine erste Fläche mit haftenden oder mechanischen Verbindungsmitteln, um den synthetischen Samtstoff entweder haftend oder mechanisch mit mindestens einer Seite des Stützkörpers (2) lösbar zu verbinden, und eine zweite Fläche aufweist, bei der es sich um eine Samtfläche handelt, und dass die haftenden Verbindungsmittel einen Klebstoff oder ein Heißklebermaterial umfassen.

2. Reinigungselement (1) nach Anspruch 1, **dadurch gekennzeichnet, dass** das geschlossenzellige geschäumte Kunststoffmaterial ein Gewicht von 10 bis 350 kg/m³ aufweist.

3. Reinigungselement (1) nach Anspruch 1, **dadurch gekennzeichnet, dass** das synthetische Samtstoffmaterial (3) ein mechanisch kardiertes oder erhabenes synthetisches Samtstoffmaterial umfasst.

4. Reinigungselement (1) nach Anspruch 1, **dadurch gekennzeichnet, dass** das haftende Material einen Polyurethanklebstoff umfasst.

5. Reinigungselement (1) nach Anspruch 1, **dadurch gekennzeichnet, dass** die lösbaren Verbindungsmittel ein Klettbandsystem umfassen.

6. Reinigungselement (1) nach Anspruch 1, **dadurch gekennzeichnet, dass** der synthetische Samtstoff ein Polyamid, Polyestermaterial oder ein Derivat davon umfasst.

7. Reinigungselement (1) nach Anspruch 1, **dadurch gekennzeichnet, dass** der Plattenkörper (2) eine längliche Gestalt aufweist, die sich durch eine Längsachse eines Bandelements erstreckt und mit mehreren Ausschnitten versehen ist, die mehrere parallele Bandstreifen definieren, wobei der Plattenkörper (2) dafür ausgelegt ist, um 180° um eine Längsachse davon gefaltet zu werden, um zwei Sektoren (6, 7) bereitzustellen, die einander überlappend angeordnet werden.

8. Reinigungselement (1) nach Anspruch 1, **dadurch gekennzeichnet, dass** das synthetische Samtstoffmaterial (3) eine Gesamtfläche des Plattenkörpers (2) bedeckt.

9. Reinigungselement (1) nach Anspruch 1, **dadurch gekennzeichnet, dass** das synthetische Stoffmaterial mit dem Körper (2) auf abwechselnde Weise verbunden ist, um ein bivalentes Element bereitzustellen, das von einer Drehrichtung einer Bürste in Bezug auf eine zu bearbeitende Oberfläche einer Fahrzeugkarosserie abhängt.

10. Reinigungselement (1) nach Anspruch 1, **dadurch gekennzeichnet, dass** der synthetische Samtstoff mehrere verschieden ausgerichtete Rippen- oder Vorsprungsabschnitte umfasst, die so geformt oder angeordnet sind, dass sie eine Reinigungsfläche mit mehreren hervorstehenden und vertieften Reinigungsbereichen bilden.

11. Reinigungselement (1) nach Anspruch 1, **dadurch gekennzeichnet, dass** das synthetische gerippte Samtstoffmaterial mehrere Rippen umfasst, die in Bezug auf die Längsausdehnung des Plattenkörpers (2) geneigt sind.

12. Reinigungselement (1) nach Anspruch 1, **dadurch gekennzeichnet, dass** das synthetische gerippte Stoffmaterial mehrere Rippen umfasst, die parallel zur Längsausdehnung des Plattenkörpers (2) angeordnet sind.

13. Reinigungselement (1) nach Anspruch 1, **dadurch gekennzeichnet, dass** das synthetische gerippte Samtstoffmaterial mehrere Rippen umfasst, die in Bezug auf die Längsausdehnung des Plattenkörpers (2) quer ausgerichtet sind.

14. Reinigungselement (1) nach Anspruch 1, **dadurch gekennzeichnet, dass** das synthetische gerippte Samtstoffmaterial mehrere Rippen mit einer winkelförmigen Konfiguration umfasst.

15. Reinigungselement (1) nach Anspruch 1, **dadurch gekennzeichnet, dass** das synthetische gerippte Samtstoffmaterial mehrere Rippen mit einem im Wesentlichen sinusförmigen Muster umfasst.

16. Reinigungselement (1) nach Anspruch 1, **dadurch gekennzeichnet, dass** das synthetische gerippte Samtstoffmaterial mehrere Rippenelemente mit einem spitz zulaufenden Muster umfasst.

## Revendications

1. Élément de feuille lamellaire de nettoyage perfectionné (1) pour fabriquer des brosses de lavage rotatives pour des systèmes de lavage de véhicules à moteur, ledit élément comprenant un corps en plaque (2) formant un corps supportant une base dudit élément de nettoyage (1), dessus sont appliqués des matériaux de tissu de velours synthétique ou de feutre (3), ledit corps en plaque (2) étant fait d'un matériau plastique moussé à cellules fermées, **caractérisé en ce que** ledit matériau plastique moussé à cellules fermées est un polyéthylène moussé à cellules fermées ou EVA, que lesdits matériaux de tissu de velours synthétique ou de feutre (3) ont des propriétés de retrait des poussières, de lavage, de séchage et de polissage du corps du véhicule, que lesdits matériaux de tissu de velours synthétique ou de feutre (3) comprennent un tissu de velours synthétique soit plat soit côtelé présentant une première face comprenant un moyen de couplage adhésif ou mécanique pour coupler de façon amovible, soit adhésive soit mécanique, ledit tissu en velours synthétique sur au moins un côté dudit corps de support (2) et une seconde face qui est une face en velours, et que ledit moyen de couplage adhésif comprend un matériau adhésif ou adhésif thermofusible.

2. Élément de nettoyage (1) selon la revendication 1, **caractérisé en ce que** ledit matériau plastique moussé à cellules fermées présente un poids de 10 à 350 Kg/M³.

3. Élément de nettoyage (1) selon la revendication 1, **caractérisé en ce que** ledit tissu de velours synthétique (3) comprend un matériau de tissu de velours synthétique cardé ou gratté.

4. Élément de nettoyage (1) selon la revendication 1, **caractérisé en ce que** ledit matériau adhésif comprend une colle polyuréthane.

5. Élément de nettoyage (1) selon la revendication 1, **caractérisé en ce que** ledit moyen de couplage amovible comprend un système « velcro ».

6. Élément de nettoyage (1) selon la revendication 1, **caractérisé en ce que** ledit tissu de velours synthétique comprend un matériau polyamide, polyester ou un dérivé de ceux-ci.

7. Élément de nettoyage (1) selon la revendication 1, **caractérisé en ce que** ledit corps en plaque (2) présente une forme allongée s'étendant à travers un axe longitudinal d'un élément en bande, et étant doté d'une pluralité de découpes définissant une pluralité de feuilles parallèles, ledit corps en plaque (2) étant adapté pour être plié à 180° le long d'un axe longitudinal de celui-ci pour fournir deux secteurs (6, 7) destinés à se chevaucher.

8. Élément de nettoyage (1) selon la revendication 1, **caractérisé en ce que** ledit tissu de velours synthétique (3) couvre une surface totale dudit corps en plaque (2).

9. Élément de nettoyage (1) selon la revendication 1, **caractérisé en ce que** ledit tissu de velours synthétique est couplé audit corps (2) en alternance pour fournir un élément bivalent en fonction d'une direction de rotation d'une brosse par rapport à une surface de corps de véhicule à moteur à traiter.

10. Élément de nettoyage (1) selon la revendication 1, **caractérisé en ce que** ledit tissu de velours synthétique comprend une pluralité de parties en saillies ou de nervures orientées de façon variée ainsi formées ou agencées pour former une surface de nettoyage présentant une pluralité de zones de nettoyage protubérantes ou renfoncées.

11. Élément de nettoyage (1) selon la revendication 1, **caractérisé en ce que** ledit matériau de tissu de velours côtelé synthétique comprend une pluralité de nervures inclinées par rapport à l'extension longitudinale dudit corps en plaque (2).

12. Élément de nettoyage (1) selon la revendication 1, **caractérisé en ce que** ledit matériau de tissu côtelé de velours synthétique comprend une pluralité de nervures agencées parallèlement à l'extension longitudinale dudit corps en plaque (2).

13. Élément de nettoyage (1) selon la revendication 1, **caractérisé en ce que** ledit matériau de tissu de velours côtelé synthétique comprend une pluralité de nervures agencées transversalement à l'extension longitudinale dudit corps en plaque (2).

14. Élément de nettoyage (1) selon la revendication 1, **caractérisé en ce que** ledit matériau de tissu côtelé de velours synthétique comprend une pluralité de nervures en configuration angulaire.

15. Élément de nettoyage (1) selon la revendication 1, **caractérisé en ce que** ledit matériau de tissu côtelé de velours synthétique comprend une pluralité de nervures présentant un motif essentiellement sinusoïdal.

16. Élément de nettoyage (1) selon la revendication 1, **caractérisé en ce que** ledit matériau de tissu côtelé de velours synthétique comprend une pluralité d'éléments de nervures ayant un motif en pointe.
